Europäisches Patentamt

European Patent Office

Office européen des brevets

(11) Veröffentlichungsnummer: **0 416 639 A2**

# EUROPÄISCHE PATENTANMELDUNG

(21) Anmeldenummer: 90117240.3

(22) Anmeldetag: 07.09.90

(51) Int. Cl.⁵: **C03B 37/15**, G02B 6/28

(30) Priorität: 08.09.89 DE 3930029

(43) Veröffentlichungstag der Anmeldung:
13.03.91 Patentblatt 91/11

(84) Benannte Vertragsstaaten:
**AT BE CH DE DK ES FR GB IT LI NL SE**

(71) Anmelder: **Standard Elektrik Lorenz Aktiengesellschaft**
**Lorenzstrasse 10**
**W-7000 Stuttgart 40(DE)**

(84) **DE**

Anmelder: **ALCATEL N.V.**
**Strawinskylaan 341 (World Trade Center)**

**NL-1077 XX Amsterdam(NL)**

(84) **BE CH DK ES FR GB IT LI NL SE AT**

(72) Erfinder: **Rossberg, Rolf**
**Thüringer Strasse 17**
**W-7141 Schwieberdingen(DE)**
Erfinder: **Mohr, Friedemann, Dr.**
**Stauferstrasse 6**
**W-7253 Renningen(DE)**

(74) Vertreter: **Pohl, Heribert, Dipl.-Ing et al**
**Standard Elektrik Lorenz AG Patent- und**
**Lizenzwesen Postfach 30 09 29**
**W-7000 Stuttgart 30(DE)**

(54) Verfahren zum Herstellen eines optischen Verschmelzkopplers.

(57) Das Verfahren besteht darin, daß zuerst zwischen die Anschlußfasern (1, 2) von parallel liegenden Fasern (Fig. 1) je ein kurzes Stück einer Einmodenfaser (3, 4) eingespleißt wird (Fig. 2), daß danach die beiden eingespleißten Einmodenfasern (3, 4) untereinander verschmolzen (Fig. 3) und zu einem Koppler (6) (Fig. 4) ausgezogen werden und daß der Koppler (6) bis über die Spleißstellen (5) in ein schützendes Gehäuse (7) eingebettet wird.

FIG.1

FIG.2

FIG.3

FIG.4

## VERFAHREN ZUM HERSTELLEN EINES OPTISCHEN VERSCHMELZKOPPLERS

Die Erfindung geht von einem Verschmelzkoppler gemäß dem Oberbegriff des Anspruchs 1 aus.

Durch die PCT-Anmeldung WO 84/04822 ist ein optischer Verschmelzkoppler bekannt, der aus zwei im Zentimeterbereich parallel miteinander verschweißten und zu einem Koppler ausgezogenen Einmodenfasern besteht. Der Koppelbereich und die dazugehörenden abgemantelten Fasern sind in einem Gehäuse untergebracht. Die Faserenden des Kopplers werden dann an eine Faser der übertragungsstrecke oder an einen anderen elektro-optischen Wandler angespleißt, weshalb die freien Enden des Kopplers relativ lang sein müssen.

Wird ein solcher Koppler aus Einmodenfasern an polarisationserhaltende Fasern angespleißt, dann muß die eine der optischen Hauptachsen in der Kopplerebene liegen (und die andere senkrecht zur Kopplerebene), damit der Polarisationsgrad (Extinktion) des polarisierten Lichtes beibehalten wird. Dazu müssen die Kopplerfasern möglichst kurz sein, um eine Depolarisierung des Lichtes zu vermeiden. Dies ist mit dem bekannten Koppler nur schwer realisierbar.

Die Aufgabe der Erfindung besteht darin, einen KoppLer aus Einmodenfasern zu schaffen, der sich wirtschaftlich herstellen und sich insbesondere in Verbindung mit polarisationserhaltenden Fasern einsetzen läßt.

Diese Aufgabe wird durch die im Anspruch 1, 2 oder 3 angegebenen Merkmale gelöst. Der Unteranspruch zeigt eine vorteilhafte Maßnahme auf, die durch das erfindungsgemäße Herstellungsverfahren ermöglicht wird.

Die durch das erfindungsgemäße Herstellungsverfahren erzielten Vorteile bestehen insbesondere darin, daß die den Koppler bildenden Einmodenfasern sehr kurz sind, daß das Anspleißen der polarisationserhaltenden Anschlußfasern trotz der kurzen Länge der Einmodenfasern ohne Schwierigkeiten durchführbar ist, daß im Fall von polarisationserhaltenden Anschlußfasern vor dem Einspleißen der Einmodenfasern die Hauptachsen der polarisationserhaltenden Anschlußfasern aufeinander und in der Kopplerebene liegend ausgerichtet werden können und daß der Koppler bis über die angespleißten, polarisationserhaltenden Fasern in einem Gehäuse spannungsfrei und vor Umwelteinflüssen geschützt eingebettet ist.

Anhand eines Beispiels wird das Verfahren zum Herstellen eines Kopplers gemäß der Erfindung in Verbindung mit den Zeichnungen nachfolgend näher erläutert. Es zeigen:

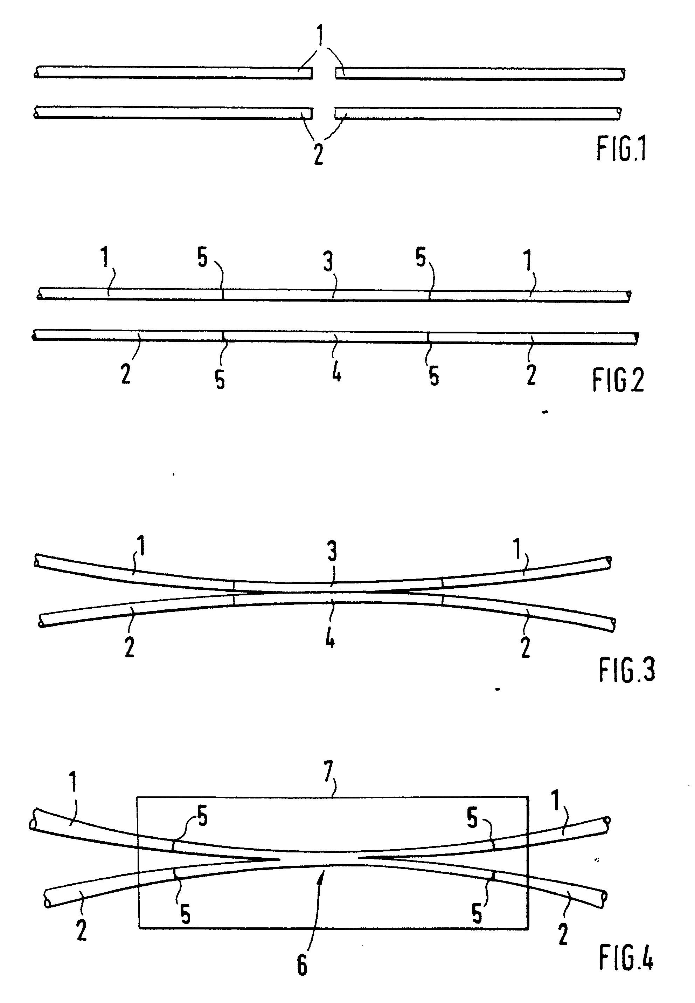

Fig. 1 zwei parallel liegende polarisationserhaltende optische Fasern in schematischer Darstellung, die in der Mitte aufgetrennt sind;

Fig. 2 die beiden polarisationserhalt enden Fasern gemäß Fig. 1, in die jeweils ein kurzes Stück einer Einmodenfaser eingespleißt ist, in schematischer Darstellung;

Fig. 3 die Anordnung der Fasern gemäß Fig - 2 zum Zeitpunkt der Verschmelzung zum Koppler in schematischer Darstellung;

Fig. 4 die Anordnung der Fig. 3 bei verschmolzenen und zu einem Koppler ausgezogenen Einmodenfasern in schematischer Darstellung.

Die Figuren 1 bis 4 zeigen vier Zustände im Verlauf des Herstellungsprozesses eines Kopplers gemäß der Erfindung in schematischer Darstellung. Aus Gründen der besseren Übersicht ist auf die Darstellung der üblichen Schutzbeschichtung des eigentlichen Lichtwellenleiters, weiterhin als Faser bezeichnet, verzichtet. Das Freilegen der Fasern, ihre Vorbehandlung und das Verschmelzen zu einem Koppler ist hinreichend bekannt und zudem eingehend in der bereits genannten PCT-Anmeldung WO 84/04822 beschrieben.

Fig. 1 zeigt zwei parallel liegende Fasern, die zum Einfügen eines kurzen Stücks einer Einmodenfaser in der Mitte aufgetrennt sind und die die Anschlußfasern 1 und 2 bilden.

Handelt es sich bei den Fasern um polari sationserhaltende, d.h. um Fasern, die in Längsrichtung linear doppelbrechend sind, so sind vor dem Einspleißen der Einmodenfasern die optischen Hauptachsen der Anschlußfasern 1 und 2 paarweise aufeinander und in der Ebene des zu bildenden Kopplers 6 (Fig. 4) liegend so auszurichten, daß jeweils eine der beiden Hauptachsen der Fasern in der Kopplerebene liegt. Die AnschLußfasern 1 und 2 werden in dieser Einstellung fixiert. Handelt es sich bei den Anschlußfasern 1 und 2 um nicht doppelbrechende Fasern, d.h. um nicht polarisationserhaltende Fasern, so ist ein derartiges Ausrichten nicht erforderlich. In diesem Fall werden die Anschlußfasern 1 und 2 nur zum Spleißen fixiert.

Die so festgelegten Enden der Anschlußfasern 1 und 2 werden sodann so weit voneinander getrennt, daß jeweils ein etwa 1 bis 2 Zentimeter langes Stück einer Einmodenfaser 3 bzw. 4 zwischen die Anschlußfasern 1 bzw. 2 eingespleißt werden kann. Diesen Zustand zeigt Fig. 2. Anschließend werden die beiden Einmodenfasern 3 und 4 im eingespleißten Zustand in an sich bekannter Weise miteinander verschmolzen (Fig. 3) und zu einem Koppler 6 ausgezogen (Fig. 4) . Dabei ist dafür gesorgt, daß sich die Orientierung der Anschlußfasern 1 und 2 zueinander und zur Kopplerebene nicht ändert.

Der Koppler 6 wird anschließend bis über die Spleißstellen 5 in ein hier nur durch die Umrisse gekennzeichnetes Gehäuse 7 spannungsfrei und gegen Umwelteinflüsse geschützt eingebettet.

Verschmelzkoppler lassen sich auch aus polarisationserhalt enden Fasern verschiedener Fasertypen herstellen. Dabei muß man sich allerdings auf Fasern beschränken, die außerhalb des Kernbereiches keine Erhöhung des Brechungsindex aufweisen.

Für Koppler mit niedrigen Verlusten sind vorzugsweise Fasern geeignet, bei denen die spannungserzeugenden Elemente, die parallel zum Faserkern liegen und die die Doppelbrechung bewirken, im Brechungsindex an das Mantelglas angepaßt sind.

## Ansprüche

1. Verfahren zum Herstellen eines optischen Verschmelzkopplers aus nicht doppelbrechenden Einmodenfasern, zum Einfügen zwischen Anschlußfasern, **gekennzeichnet durch** folgende Schritte:
   a) Einspleißen eines kurzen Stücks einer nicht doppelbrechenden Einmodenfaser (3, 4) zwischen die Anschlußfasern (1, 2),
   b) Verschmelzen der eingespleißten Einmodenfasern (3, 4) und Ausziehen zu einem Koppler (6),
   c) spannungsfreies Einbetten des Kopplers (6) bis über die Spleißstellen (5) in einem Gehäuse (7).
2. Verfahren zum Herstellen eines optischen Verschmelzkopplers aus nicht doppelbrechenden Einmodenfasern, zum Einfügen zwischen polarisationserhaltenden Anschlußfasern, **gekennzeichnet durch** folgende Schritte:
   a) Ausrichten der optischen Hauptachsen der Anschlußfasern (1, 2) aufeinander, wobei jeweils eine der bei den Hauptachsen in der Ebene des zu bildenden Kopplers liegt, und Fixieren der Anschlußfasern (1,2),
   b) Einspleißen eines kurzen Stücks einer nicht doppelbrechenden Einmodenfaser (3, 4) zwischen die Anschlußfasern (1, 2),
   c) Verschmelzen der eingespleißten Einmodenfasern (3, 4) und Ausziehen zu einem Koppler (6),
   d) spannungsfreies Einbetten des Kopplers (6) bis über die Spleißstellen (5) in einem Gehäuse (7).
3. Verfahren zum Herstellen eines optischen Verschmelzkopplers aus doppelbrechenden, polarisationserhaltenden Einmodenfasern, zum Einfügen zwischen polarisationserhaltenden Anschlußfasern, **gekennzeichnet durch** folgende Schritte:
   a) Ausrichten der optischen Hauptachsen der Anschlußfasern (1, 2) aufeinander, wobei jeweils eine der beiden Hauptachsen in der Ebene des zu bildenden Kopplers liegt, und Fixieren der Anschlußfasern (1,2),
   b) Einspleißen eines kurzen Stücks einer doppelbrechenden, polarisationserhaltenden Einmodenfaser (3, 4) zwischen die Anschlußfasern (1, 2),
   c) Verschmelzen der eingespleißten Einmodenfasern (3, 4) und Ausziehen zu einem Koppler (6),
   d) spannungsfreies Einbetten des Kopplers (6) bis über die Spleißstellen (5) in einem Gehäuse (7).
4. Anordnung gemäß den Verfahren nach Anspruch 1, 2 oder 3, dadurch gekennzeichnet, daß die den eigentlichen Koppler bildenden Einmodenfasern (3, 4) eine Länge von 1 bis 2 cm haben.

FIG.1

FIG 2

FIG.3

FIG.4